# EUROPEAN PATENT SPECIFICATION

(11) **EP 1 778 015 B1**
(45) Date of publication and mention of the grant of the patent: **01.06.2011**
(21) Application number: 04781417.3
(22) Date of filing: 17.08.2004
(51) Int. Cl.: A21C 11/00, B29B 13/06

(54) **ADJUSTABLE EXPANDER DIE FOR USE IN DRYING ELASTOMERS**
EINSTELLBARE EXPANSIONSDÜSE ZUM TROCKNEN VON ELASTOMEREN
FILIÈRE D"EXTENSEUR AJUSTABLE POUR UTILISATION LORS DU SÉCHAGE D"ÉLASTOMÈRES

(43) Date of publication of application: 02.05.2007
(73) Proprietor: Société de Technologie Michelin, 63000 Clermont-Ferrand (FR); Michelin Recherche et Technique S.A., 1763 Granges-Paccot (CH)
(72) Inventor: FLANNERY, Timothy, McKee, KY 40447 (US)
(74) Representative: Schlief, Thomas P.
(86) International application number: PCT/US2004/026718
(87) International publication number: WO 2006/022721

(56) References cited:
- US-A- 2 763 374
- US-A- 2 841 197
- US-A- 3 874 835
- US-A- 4 413 971
- US-A- 4 465 451
- US-A- 4 522 775
- US-A- 4 542 674
- US-A- 4 578 025
- US-A- 5 046 938
- US-A- 5 085 815

## Description

### FIELD OF THE INVENTION

The present invention relates to methodologies and apparatus for removing moisture from materials such as elastomers and particularly for removing water from an intermediate mixture of water and rubbers materials commonly used in the manufacture of tires.

### BACKGROUND OF THE INVENTION

Expeller-expander technology is a processing technique that has been available in various forms dating back to the nineteenth century. A process for the recovery of dry polymer is disclosed by US 5,085,815 A, wherein a polymer material is extruded through a die sleeve, cut into particles by means of a cutter mounted at the die discharge, and carried away from the cutter by an air stream. The invention reduces the generation of fines and results in an increase in the average particle size. US 2,763,374 A describes an apparatus for screening plastic materials, comprising a chamber, a stiff tube rotatably mounted in said chamber, a cut-away portion, and a plurality of ports opposite said cut-away portion. In addition, a flexible screen and means for rotating and translating said tube axially are provided to expose the cut-away portion and the screen beyond an open end of the chamber. Although it should be understood that the present invention may be used in processing a variety of different materials, the present area of concern relates to that area of an elastomer processing sequence (including synthetic and natural elastomers) where a rubber material has been combined with water and now the water is to be removed.

In previously used configurations, two extruders in series have been employed to remove moisture from the rubber. Generally, the first extruder, also referred to as the expeller, squeezes the rubber between a pair of intermeshed screws. This portion of the process is generally able to reduce the moisture content from about 60% to about 15%.

Following the first stage of the drying process by the expeller, the rubber material is passed to a second extruder referred to as an expander for additional drying. This second extruder increases the pressure applied to the rubber, which consequently increases the temperature of the rubber to create a super heated liquid. As this super heated liquid is forced through the extruder, again commonly by using screw drive technology, the material is forced through dies or filter screens at the end of the screw where the moisture, or volatile matter, will flash dry.

The flash drying process corresponds to a rapid change in state from liquid to vapor as the super heated water and rubber materials are passed through the die or filter screen and suddenly returned to normal atmospheric pressure. Because the temperature is still generally significantly higher than 100 degrees Celsius, the drop in pressure causes a sudden change in state. The energy necessary to produce the flash drying phenomena is transferred to the rubber from the screw drive mechanism in the expander. This transfer of energy is made possible by the resistance of the rubber to exit the expander through the dies. The temperature and pressure on the super heated rubber and water mixture reach a maximum at the dies. For a given screw speed and rubber flow rate, the resistance, and therefore the amount of energy transferred to the rubber, is dependent on the pressure at the head.

The pressure is fixed by the pressure drop induced by the passage of the super heated rubber and water materials through the die. In a practical system, there will be a number of dies at the exit point of the expander and thus the pressure will depend on the number of dies, their geometry and aperture size. In previously employed configurations, all of these aspects of the dies were fixed with any one processing sequence. Because the prior art is a fixed and unchangeable configuration, certain production problems have occurred that the present technology addresses and overcomes.

When the super heated rubber and water material goes through the dies, the flash drying process produces decohesion of the rubber thereby creating rubber crumbs that are transported to balers for further processing. The control of the size of these crumbs is one of the aspects effecting good transportation of the rubber through the remaining processing sequences and, consequently, can have an impact on further processing. For example, conveyor fouling can occur based on production of too small a crumb size. As the currently available technology employs preset die configurations, no capability other than stopping production is available to address issues involving pressure adjustment and crumb size. Moreover, there is no capability for optimizing the overall rubber processing process outside of controlling the expeller-expander screw speed without shutting down production.

Another problem encountered with the flash drying process previously described is the production of fines - a very small and undesirable particulate. Fines can become airborne and can adhere to equipment, structures, and personnel. Accordingly, elimination or at least reduction of the amount of fines created by flash drying is desirable. While various implementations of extruder-expander technology have been developed, the present invention provides substantial improvements in addressing the problems identified above.

### SUMMARY OF THE INVENTION

In view of the recognized features encountered in the prior art and addressed by the present subject matter, an improved methodology for drying elastomeric materials has been developed. The present invention is directed to methodologies and apparatus that provide for the optimization of the pressure at the die head without the necessity of shutting down production. Adjustments can be made during operation of the flash drying process. Furthermore, a substantial reduction in fines as well as improved control of crumb size can be achieved with the present invention, particularly with certain rubber materials. Dynamic control of the overall operation of an extruder-expander system, including control of temperature and pressure, can be achieved without shutting down the system.

The present invention provides an adjustable die for use with an expander for processing rubber and water materials. This exemplary embodiment includes an inner sleeve that defines a first end and a second end that are connected by an interior passage. The sleeve defines a plurality of closely spaced apertures along a side of the sleeve and also defines a single aperture that is positioned along another side of the sleeve apart from the plurality of closely spaced apertures. An outer element defines a conduit into which the inner sleeve is rotatably received. The outer element also defines an outlet that may be selectively placed in fluid communication with the interior passage by rotation of the inner sleeve. A positioning element is provided in mechanical communication with the second end of the inner sleeve. The positioning element is configured for rotating the inner sleeve relative to the outer element such that the plurality of closely spaced apertures and the single aperture may be selectively placed in fluid communication with the outlet of the outer element.

In one exemplary embodiment of the present invention, an adjustable die for processing rubber and water materials is provided that includes a cylindrically-shaped sleeve. The sleeve defines a plurality of proximate apertures along a first side. The sleeve also defines a single aperture along a second side that is positioned opposite the first side. The sleeve also defines an interior passage between an inlet end and an outlet end. A housing is provided that defines a conduit that is configured for the receipt of the sleeve. The housing defines an opening along one side, which is connected to the conduit. A ring gear is mechanically connected with the outlet end of the housing and is configured for rotating the sleeve relative to the housing such that the plurality of proximate apertures and the single aperture may be selectively positioned adjacent to the opening of the housing. A plug may be provided that is connected to the outlet end of the sleeve. The plug defines at least one channel in fluid communication with the interior passage. A worm gear can be provided that is in mechanical communication with the ring gear and is used to selectively position the plurality of proximate apertures and the single aperture adjacent to the opening of the housing. The plug may be connected to the outlet end of the sleeve by complementary threads; however, other methods of connecting the plug and the sleeve may be used. The ring gear can be connected to the outlet end of the sleeve by using a connector that is mechanically fastened to the ring gear and configured for mating receipt of the outlet end of the sleeve. In certain embodiments, the housing is attached to an expander and the inlet end is configured for the receipt of production materials, such as rubber intermediates used in tire production, from the expander.

additional objects and advantages of the present subject matter are set forth in, or will be apparent to, those of ordinary skill in the art from the detailed description herein. Also, it should be further appreciated that modifications and variations to the specifically illustrated, referred and discussed features and elements hereof may be practiced in various embodiments and uses of the invention without departing from the spirit and scope of the subject matter as defined by the claims.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 illustrates an exemplary expander head and die head set up employing three separate die heads and a relief valve.

FIG. 2 illustrates an exploded perspective view of an exemplary embodiment of an adjustable die head according to the present invention.

FIGS. 3A, 3B, and 3C illustrate a perspective view (from line 3-3 of FIG. 1) of an exemplary embodiment of the present invention with arrows A and B indicating adjustment.

FIGS. 4A and 4B illustrate a cross-sectional view of an exemplary embodiment of the present invention taken along line 4-4 of FIG. 1. Arrows C of FIG. 4B depicts the flow of material therethrough.

Repeat use of reference characters throughout the present specification and appended drawings is intended to represent same or analogous features or elements of the invention.

### DETAILED DESCRIPTION OF THE PREFERRED EMBODIMENTS

Reference will now be made in detail to embodiments of the invention, one or more examples of which are illustrated in the drawings. Each example is provided by way of explanation of the invention, and not meant as a limitation of the invention.

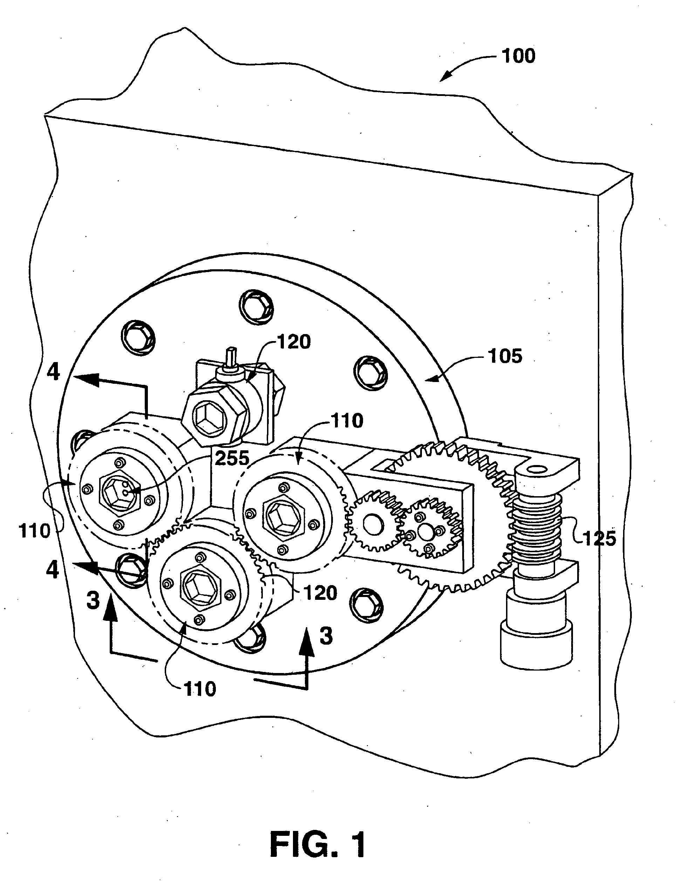

Referring to FIG. 1, there is illustrated an exemplary expander 100 with expander head 105 that is configured with three separate die heads 110. It should be appreciated that, although three die heads 110 are illustrated in the present configuration, such is exemplary only and the number of die heads 110 may vary depending on processing requirements such as the specific type of elastomer being processed. Shown also is a relief valve port 120 for protection in the event of an over-pressure of the equipment and for manually releasing pressure in expander head 100 as desired.

Die heads 110 each include a ring gear 115 having a plurality of teeth 120. Each ring gear 115 is in mechanical communication with other ring gear 115 by teeth 120. Accordingly, rotation of any particular gear 116 occurs in coordination with the rotation of the other ring gears 115. Furthermore, for the exemplary embodiment being described, rotation of ring gear 115 will adjust flow rate from, and therefore pressure and temperature in, expander 100. More specifically, rotation of worm gear 125 causes transfer gears 130, 135, and 140 to rotate. In turn, ring gears 115 rotate and thereby adjust die heads 110 through the operation of elements that will be described below. The rotation of worm gear 125 may be effected manually or by coupling worm gear 125 with a power source such as, for example, an electric motor or hydraulics. Automated controls may also be employed to allow for selective or automatic adjustment during operation of expander 100. For example, an accompanying control mechanism may be associated with expander 100 for automatically controlling the flow rate through die heads 110 so as to meet the desired processing requirements. As illustrated by this exemplary embodiment, the present invention allows such adjustments to be made dynamically, i.e. during operation of expander 100

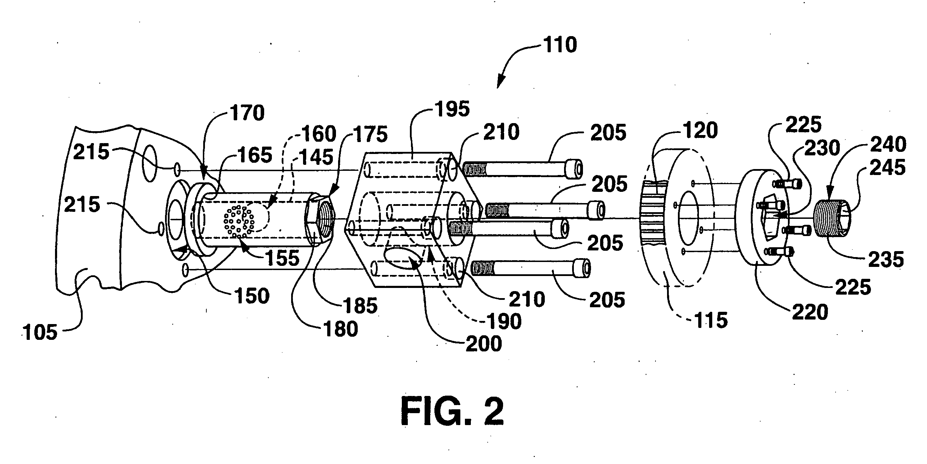

FIG. 2 shows an exploded view of exemplary die head 110. A cylindrically-shaped sleeve or constrictor 145 fits into a recess 150 in expander head 105. Constrictor 145 includes a plurality of closely spaced apertures 155 on one side and an oppositely placed single, larger aperture 160. A flange 165 is positioned on the inlet end 170 of constrictor 145. Flange 165 rests upon and is rotatable within recess 150, which acts to otherwise prevent lateral displacement of flange 165. Outlet end 175 is configured with a hexagonal external feature 180 and internal threads 185, the purpose of which is to be described.

Constrictor 145 is received within conduit 190 defined by housing 195. Conduit 190 is also configured such that constrictor 145 may rotate with housing 195. Housing 195 also defines housing outlet 200, which defines a fluid path that is normal to the length of conduit of 195. Housing 195 is secured to expander head 105 using four bolts 205 that extend through apertures 210 and fasten into threaded openings 215.

Ring gear 115 is positioned between connector 220 and housing 195. Connector 220 is mechanically fastened to ring gear 115 using four bolts 225 and has a hexagonally-shaped opening 230 configured for the receipt of outlet end 175 of constrictor 145. Accordingly, as ring gear 115 is rotated, connector 220 causes constrictor 145 to rotate relative to housing 195.

A plug or insert 235 is received into outlet end 175 of constrictor 145. Threads 240 on insert 235 are configured for complementary receipt by internal threads 185 of constrictor 145. Hexagonally shaped recess 245 provides for the insertion or removal of insert 235 from outlet end 175.

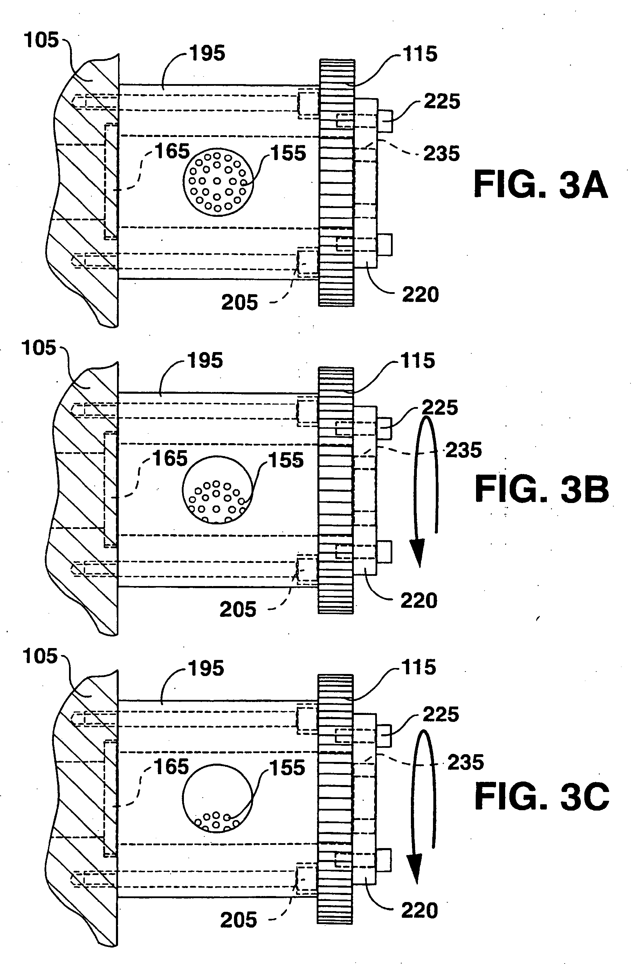

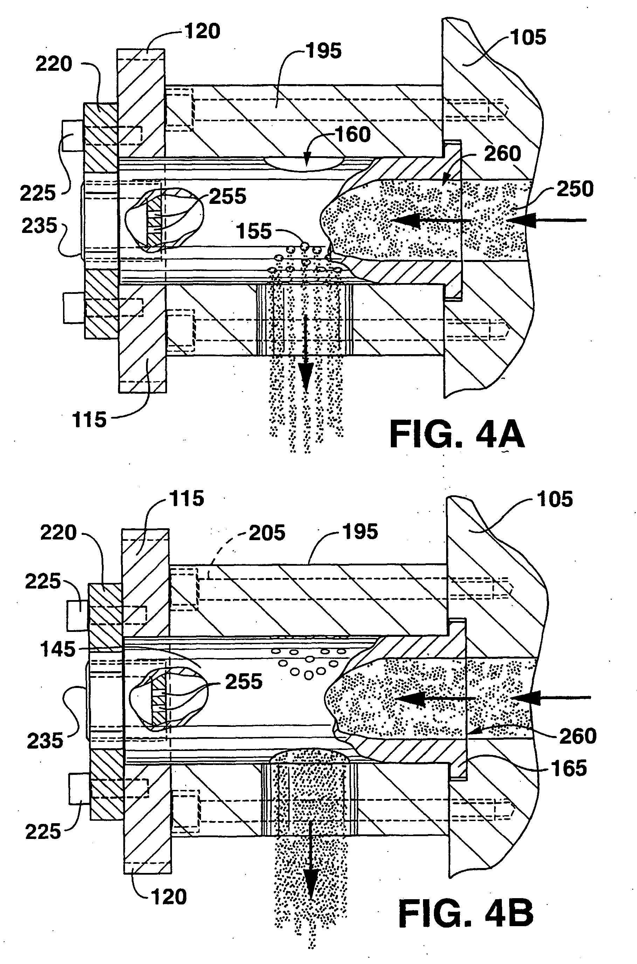

FIGS. 3A, 3B, and 3C illustrate a perspective view (from line 3-3 of Fig. 1) of die head 110. FIGS. 4A and 4B illustrate a cross-sectional view of die head 110 taken along line 4-4 of FIG. 1. Referring now specifically to FIG. 3A, die head 110 is shown with the plurality of closely-spaced apertures 155 positioned adjacent to housing outlet 200. In such position, materials exit expander 100, enter the inlet end 170 of constrictor 145, exit constrictor 145 through apertures 155, and then pass from housing 195 by way of housing outlet 200. Arrows C in FIG. 4A illustrate this movement of rubber and water materials 250 through die head 110.

As material exits through apertures 155, a substantial pressure drop occurs, which in turn creates a flash drying effect as superheated water in materials 250 vaporizes upon reaching atmospheric pressure. As previously mentioned, the energy necessary to produce the flash drying effect is transferred to the materials 250 being processed from a screw drive in expander 100. This energy is provided in the form of elevated pressures and temperatures created by the resistance to material 250 exiting die heads 110 as expander 100 continues to apply pressure. The amount of resistance, and thus the pressure and temperature of material 250, is controlled primarily by the regulating the volume of flow allowed to exit from expander 100.

Such regulating is achieved by controlling the number of apertures 155 that are in fluid communication with housing outlet 200. As indicated by arrows A and B in FIGS. 3B and 3C, as ring gear 115 is rotated, the number of apertures 155 open to housing outlet 200 can be modified to control the volume of material 250 exiting die head 110. Arrows A and B illustrate rotation of constrictor 145 such that the number of apertures 155 in fluid communication with housing outlet 200 is reduced. Such reduction decreases the flow of material 250 from expander 100, which will generally result in an increase of temperature and pressure of materials 250 during operation. To increase the flow of material 250, and thereby reduce temperature and pressure, the number of aperture 155 exposed to housing outlet 200 would be increased. As previously discussed, for an expander 100 having multiple die heads 110 as shown in FIG. 1, these operations can be performed simultaneously for each die head 110 through rotation of worm gear 125 as previously described. Applicant has found that die head 110 can be closed, through rotation of constrictor 145, using less force than is required for other die assemblies. Such rotation can be made dynamically during operation of expander 100, thereby allowing dynamic control of process variable during operation.

For certain applications, applicant has obtained favorable results with a constrictor having a set of 24 closely spaced apertures 155 with each having a diameter of about 1/8 inch. In addition, for certain rubber materials 250, applicant has been able to more effectively reduce the production of fines and produce more favorable particle sizes using die head 110. Furthermore, housing 195 and flange 165 can be readily configured for replacement of existing dies used on current expanders.

Some applications may require that a continuous flow of material from die head 110 be provided at all times. In such case, as shown in FIGS. 4A and 4B, insert 235 may include one or more channels 255 in fluid communication with the interior passage 260 created by constrictor 145. Channels 255 allow for continuous flow of materials 250 from expander 100. As insert 235 is readily replaceable, a variety of inserts can be provided that having any number of apertures or none at all.

During startup or cleanout of expander 100, it may be desirable to provide for an open flow of materials 250 through housing outlet 200. For such applications, constrictor 145 is provided within single aperture 160 that may be rotated such that it is adjacent to housing outlet 200, thereby placing interior passage 260 in fluid communication with housing outlet 200. As shown in FIG. 4B for example, aperture 160 is larger than any of the individual apertures making up plurality of apertures 155 and is also sized to be coextensive with housing outlet 200. As such, aperture 160 allows for a maximum flow setting of die head 110 that may be desired when attempting to clear materials from expander 100, clean expander 100, or otherwise provide for a more open flow.

Accordingly, and in summary, by rotation of ring gear 115, die head 110 allows for flexibility in the operation of expander 100. More particularly, flow though housing outlet 200 may be closed, opened completely through aperture 160, or restricted by selecting the number of apertures 155 in fluid communication with outlet 200. Such operations can be performed dynamically. Applicant has found that the force required to dynamically control expander 100 using exemplary die head 110 is significantly less that with prior constructions. As such, the present invention is more amenable to being equipped with manual, powered, and/or automated control systems.

While the present subject matter has been described in detail with respect to specific embodiments thereof, it will be appreciated that those skilled in the art, upon attaining an understanding of the foregoing may readily produce alterations to and variations of such embodiments. For example, while the present invention has been described in use with drying mixtures containing elastomeric particles, the present invention is not so limited. By way of further example only, while FIG. 1 illustrates three dies heads 110 in use with expander 100, it should be understood that one or multiple die heads 110 may be used. Additionally, different configurations can be readily envisioned, using the teachings disclosed herein, for rotating ring gear 115.

## Claims

1. An adjustable die for use with an expander (100) for processing rubber and water materials, comprising:
an inner sleeve (145) defining an first end (170) and a second end (175) that are connected by an interior passage (260),
said sleeve (145) defining a plurality of closely spaced apertures (155) along a side of said sleeve (145),
**characterized in**
said sleeve (145) also defining a single aperture (160) that is positioned along another side of said sleeve (145) apart from said plurality of closely spaced apertures (155);
an outer element (195) defining a conduit (190) into which said inner sleeve (145) is rotatably received, said outer element (195) defining an outlet (200) that may be selectively placed in fluid communication with said interior passage (260) by rotation of said inner sleeve (145); and
a positioning element in mechanical communication with said second end (175) of said inner sleeve (145), said positioning element being configured for rotating said inner sleeve (145) relative to said outer element (195) such that said plurality of closely spaced apertures (155) and said single aperture (160) may be selectively placed in fluid communication with said outlet (200) of said outer element (195).

2. The die as in claim 1, wherein said inner sleeve (145) includes a flange (165) at said first end (170) that is configured for receipt by the expander (100).

3. The die as in claim 2, further comprising a removable plug (235) located within said second end (175) of said inner sleeve (145).

4. The die as in claim 3, wherein said plug (235) is connected to said second end (175) of said sleeve (145) by complementary threads (185; 240).

5. The die as in claim 3, wherein said removable plug (235) defines at least one opening (255) in fluid communication with said interior passage (260).

6. The die as in claim 5, further comprising a connector (220) that is mechanically fastened to said positioning element and said second end (175) of said inner sleeve (145) such that rotation of said positioning element causes said inner sleeve (145) to rotate relative to said outer element (195).

7. The die as in claim 6, further comprising a power source for causing said positioning element to rotate.

8. The die as in claim 7, further comprising a controller in communication with said power source for selectively rotating said inner sleeve (145) to predetermined positions.

9. The die as in claim 1, wherein said positioning element comprises a ring gear (115) in mechanical communication with said second end (175) of said inner sleeve (145).

10. The die as in claim 9, further comprising a worm gear (125) in mechanical communication with said ring gear (115), whereby said plurality of closely spaced apart apertures (155) and said single aperture (160) may be selectively positioned adjacent to said outlet (200) of said outer element (195).

11. The die as in claim 10, further comprising a motor for powering said worm gear (125).

12. The die as in claim 1, wherein flow through said single aperture (160) is perpendicular to flow from said first end (170) to said second end (175).

13. The die as in claim 1, wherein said outer element (195) is attached to an expander (100) and said first end (170) of the sleeve (145) is configured for the receipt of production materials from said expander (100).

## Patentansprüche

1. Einstellbare Spritzeinheit zur Verwendung mit einem Expander (100) zum Verarbeiten von Gummi- und Wassermaterialien, umfassend:
eine innere Hülse (145), die ein erstes Ende (170) und ein zweites Ende (175) definiert, die durch einen inneren Durchlass (260) verbunden sind,
wobei die Hülse (145) entlang einer Seite der Hülse (145) eine Vielzahl von Öffnungen (155) mit engem Abstand definiert,
**gekennzeichnet dadurch,**
**dass** die Hülse (145) auch eine einzelne Öffnung (160) definiert, die entlang einer weiteren Seite der Hülse (145), abgesondert von der Vielzahl von Öffnungen (155) mit engem Abstand, positioniert ist;
ein äußeres Element (195), das einen Kanal (190) definiert, in dem die innere Hülse (145) drehbar aufgenommen ist, wobei das äußere Element (195) einen Auslass (200) festlegt, der durch Drehung der inneren Hülse (145) wahlweise in Fluidverbindung mit dem inneren Durchlass (260) gebracht werden kann; und
ein Positionierungselement, das in mechanischer Verbindung mit dem zweiten Ende (175) der inneren Hülse (145) steht, wobei das Positionierungselement so gestaltet ist, dass es die innere Hülse (145) bezüglich des äußeren Elements (195) derart dreht, dass die Vielzahl von Öffnungen (155) mit engem Abstand und die einzelne Öffnung (160) wahlweise in Fluidverbindung mit dem Auslass (200) des äußeren Elements (195) gebracht werden können.

2. Spritzeinheit nach Anspruch 1, wobei die innere Hülse (145) an dem ersten Ende (170) einen Flansch (165) enthält, der zum Aufnehmen durch den Expander (100) gestaltet ist.

3. Spritzeinheit nach Anspruch 2, weiter umfassend einen entfernbaren Stopfen (235), der sich innerhalb des zweiten Endes (175) der inneren Hülse (145) befindet.

4. Spritzeinheit nach Anspruch 3, wobei der Stopfen (235) mit dem zweiten Ende (175) der Hülse (145) über komplementäre Gewinde (185; 240) verbunden ist.

5. Spritzeinheit nach Anspruch 3, wobei der entfernbare Stopfen (235) mindestens eine Öffnung (255) definiert, die in Fluidverbindung mit dem inneren Durchlass (260) steht.

6. Spritzeinheit nach Anspruch 5, weiter umfassend einen Verbinder (220), der mechanisch so an dem Positionierungselement und dem zweiten Ende (175) der inneren Hülse (145) befestigt ist, dass eine Drehung des Positionierungselements die innere Hülse (145) dazu bringt, sich bezüglich des äußeren Elements (195) zu drehen.

7. Spritzeinheit nach Anspruch 6, weiter umfassend eine Energiequelle, um das Positionierungselement zum Drehen zu bringen.

8. Spritzeinheit nach Anspruch 7, weiter umfassend eine Steuerung, die in Verbindung mit der Energiequelle steht, um die innere Hülse (145) wahlweise zu vorgegebenen Stellungen zu drehen.

9. Spritzeinheit nach Anspruch 1, wobei das Positionierungselement ein Ringzahnrad (115) umfasst, das in mechanischer Verbindung mit dem zweiten Ende (175) der inneren Hülse (145) steht.

10. Spritzeinheit nach Anspruch 9, weiter umfassend eine Getriebeschnecke (125), die in mechanischer Verbindung mit dem Ringzahhrad (115) steht, wodurch die Vielzahl von Öffnungen (155) mit engem Abstand und die einzelne Öffnung (160) wahlweise angrenzend an den Auslass (200) des äußeren Elements (195) positioniert werden können.

11. Spritzeinheit nach Anspruch 10, weiter umfassend einen Motor zum Antreiben der Getriebeschnecke (125).

12. Spritzeinheit nach Anspruch 1, wobei eine Strömung durch die einzelne Öffnung (160) senkrecht zu der Strömung von dem ersten Ende (170) zu dem zweiten Ende (175) ist.

13. Spritzeinheit nach Anspruch 1, wobei das äußere Element (195) an einem Expander (100) angebracht ist und das erste Ende (170) der Hülse (145) zur Aufnahme von Produktionsmaterialien von dem Expander (100) gestaltet ist.

## Revendications

1. Filière réglable pour l'utilisation dans un extenseur (100) pour le traitement de matières de caoutchouc et d'eau, comportant:
une douille intérieure (145) définissant une première extrémité (170) et une seconde extrémité (175) qui sont connectées par un passage intérieur (260),
ladite douille (145) définissant une multitude d'ouvertures proches les unes des autres (155) le long d'un côté de ladite douille (145),
**caractérisée**
**en ce que** ladite douille (145) définit également une ouverture individuelle (160) qui est positionnée le long d'un autre côté de ladite douille (145), à l'écart de ladite multitude d'ouvertures proches les unes des autres (155);
par un élément extérieur (195) définissant un conduit (190) accueillant ladite douille intérieure (145) de manière rotative, ledit élément extérieur (195) définissant un orifice de sortie (200) pouvant être placé sélectivement en communication fluidique avec ledit passage intérieur (260) par rotation de ladite douille intérieure (145), et
un élément de positionnement en communication mécanique avec ladite seconde extrémité (175) de ladite douille intérieure (145), ledit élément de positionnement étant configuré pour tourner ladite douille intérieure (145) par rapport audit élément extérieur (195) de manière à ce que ladite multitude d'ouvertures proches les unes des autres (155) et ladite ouverture individuelle (160) puissent être placées sélectivement en communication fluidique avec ledit orifice de sortie (200) dudit élément extérieur (195).

2. Filière selon la revendication 1, dans lequel ladite douille intérieure (145) comporte à ladite première extrémité (170) un collet (165) qui est configuré pour être reçu par l'extenseur (100).

3. Filière selon la revendication 2, comportant en outre un bouchon amovible (235) situé au sein de ladite seconde extrémité (175) de ladite douille intérieure (145).

4. Filière selon la revendication 3, dans lequel ledit bouchon (235) est connecté à ladite seconde extrémité (175) de ladite douille (145) par des filets complémentaires (185; 240).

5. Filière selon la revendication 3, dans lequel ledit bouchon amovible (235) définit au moins une ouverture (255) en communication fluidique avec ledit passage intérieur (260).

6. Filière selon la revendication 5, comportant en outre un connecteur (220) qui est attaché mécaniquement audit élément de positionnement et à ladite seconde extrémité (175) de ladite douille intérieure (145) de manière à ce qu'une rotation dudit élément de positionnement provoque une rotation de ladite douille intérieure (145) par rapport audit élément extérieur (195).

7. Filière selon la revendication 6, comportant en outre une source d'énergie pour provoquer la rotation dudit élément de positionnement.

8. Filière selon la revendication 7, comportant en outre un contrôleur en communication avec ladite source d'énergie pour faire tourner sélectivement ladite douille intérieure (145) à des positions prédéterminées.

9. Filière selon la revendication 1, dans lequel ledit élément de positionnement comporte une couronne dentée (115) en communication mécanique avec ladite seconde extrémité (175) de ladite douille intérieure (145).

10. Filière selon la revendication 9, comportant en outre un engrenage à vis sans fin (125) en communication mécanique avec ladite couronne dentée (115), sachant que ladite multitude d'ouvertures proches les uns des autres (155) et ladite ouverture individuelle (160) peuvent être positionnées sélectivement de manière adjacente audit orifice de sortie (200) dudit élément extérieur (195).

11. Filière selon la revendication 10, comportant en outre un moteur pour entraîner ledit engrenage à vis sans fin (125).

12. Filière selon la revendication 1, dans lequel l'écoulement à travers ladite ouverture individuelle (160) est perpendiculaire à l'écoulement partant de ladite première extrémité (170) vers ladite seconde extrémité (175).

13. Filière selon la revendication 1, dans lequel ledit élément extérieur (195) est attaché à un extenseur (100) et ladite première extrémité (170) de la douille (145) est configurée pour recevoir des matières de production depuis ledit extenseur (100).
